# EUROPÄISCHE PATENTSCHRIFT

(11) **EP 2 047 757 B1**
(45) Veröffentlichungstag und Bekanntmachung des Hinweises auf die Patenterteilung: **22.02.2012**
(21) Anmeldenummer: 08166082.1
(22) Anmeldetag: 08.10.2008
(51) Int. Cl.: A23L 1/00, A47J 27/14, A47J 43/044, A47J 36/16

(54) **Gargerät mit Rührwerk und Rückkühlmodul und Verfahren zum Betreiben eines derartigen Gargerätes**
Cooking device with stirrer and recooling module and method for operating such a cooking device
Appareil de cuisson doté d'un agitateur et d'un module de récupération du froid et procédé de fonctionnement d'un tel appareil de cuisson

(30) Priorität: 11.10.2007 DE 102007049016
(43) Veröffentlichungstag der Anmeldung: 15.04.2009
(73) Patentinhaber: MKN Maschinenfabrik Kurt Neubauer GmbH & Co., 38300 Wolfenbüttel (DE)
(72) Erfinder: Scharnofske, Hartmut, 38304 Wolfenbüttel (DE); Apel, Reiner, 38304, Wolfenbüttel (DE); Korgmeier, Bruno, 38300, Wolfenbüttel (DE)
(74) Vertreter: Einsel, Martin

(56) Entgegenhaltungen:
- WO-A-01/06857
- JP-A- 9 000 438

## Beschreibung

Die Erfindung betrifft ein Gargerät gemäß dem Oberbegriff von Anspruch 1 mit einem Garbehälter und einer Einfüllöffnung, mit einem im Garbehälter angeordnetem Rührwerk, mit einem Rückkühlmodul zur Kühlung des Nahrungsmittels im Garbehälter, und mit einem Verschluss für die Einfüllöffnung des Garbehälters. Die Erfindung betrifft außerdem ein Verfahren zum Betreiben dieses Gargeräts gemäß dem Oberbegriff von Anspruch 14.

Gargeräte werden unter anderem auch in Großküchen und Gemeinschaftsverpflegungseinrichtungen eingesetzt. Bei diesen Einsatzfeldern, etwa in Seniorenheimen, Rehabilitationsstätten, Krankenhäusern, Jugendherbergen oder auch Kantinen von Großbetrieben muss gleichzeitig eine relativ große Menge an Speisen zubereitet werden. Zu diesen Speisen zählen auch rührbare Nahrungsmittel wie beispielsweise Suppen, Kartoffelbrei, Pudding, Hühnerfrikassee oder Soßen.

Die Zubereitung erfolgt in einem Garbehälter mit einer zylindrischen Wand und einer im Regelfall vertikal verlaufenden Zylinderachse, die entsprechend eine Mittelachse des Garbehälters bildet. Diese Mittelachse ist häufig auch die Drehachse eines Rührwerks. Das Rührwerk dreht sich mit einer variablen und typabhängigen Geschwindigkeit, die in Umdrehungen pro Minute angegeben werden kann und bewegt so das entsprechende Nahrungsmittel während des Garvorgangs und auch während anderer Phasen, sofern gewünscht.

Die entsprechenden Nahrungsmittel werden zunächst in ihrer Grundsubstanz, etwa als Flüssigkeit wie beispielsweise in Form von Wasser oder Milch oder Lösung und/oder in Pulverform oder auch Flockenform in den Garbehälter gegeben und dann dort mit den jeweils zu den Nahrungsmitteln passenden Temperaturschritten und Rührmaßnahmen zubereitet.

Die mit derartigen Gargeräten zubereiteten Nahrungsmittel sind teilweise direkt verzehrfertig, jedoch auch häufig nicht für den unmittelbaren Verzehr gedacht. Gerade für den vorbeschriebenen Einsatz in Großküchen und Gemeinschaftsverpflegungseinrichtungen ist zu bedenken, dass dort Speisen an sieben Tagen in der Woche ausgegeben werden, die aber auf Grund der Arbeitszeiten der mit der Zubereitung beschäftigten Mitarbeiter aber im Wesentlichen innerhalb von fünf Arbeitstagen in der Woche zubereitet werden müssen, so dass an den beiden nicht für die regelmäßige Arbeit zur Verfügung stehenden Tagen dann nur noch eine Zusammenstellung und Ausgabe durch eine reduzierte Anzahl von Arbeitskräften erfolgen muss.

Aus diesem Grund werden in den Gargeräten die Speisen fertig zubereitet, dann aber auf relativ tiefe Temperaturen deutlich unterhalb der Zimmertemperatur bis in Bereiche von etwa 10° C oder sogar 3 °C herabgekühlt und dann in entsprechend vorbereiteten Aufbewahrungsräumen, so genannten Chill Rooms, bis zur Ausgabe gelagert. Dabei kann auch die Möglichkeit einer Vorportionierung genutzt werden.

Mit einem derartigen Gargerät wird es dem Koch in einer Großküche oder Gemeinschaftsverpflegungseinrichtung möglich, mit vergleichsweise wenig Garvorgängen und damit auch entsprechend wenig Vorbereitungs- und Reinigungsvorgängen eine relativ große Auswahl an unterschiedlichen Gerichten zusammenstellen und zur Ausgabe zur Verfügung stellen zu können.

Die beschriebenen Gargeräte sind heutzutage insbesondere als Kochgeräte im Einsatz. Es gibt jedoch auch einige andere Anwendungsfälle, bei denen ähnliche Geräte verwendet werden können, so dass hier allgemein von Gargeräten gesprochen wird. So gibt es folgende Möglichkeit einer Zubereitung eines Nahrungsmittels. Zunächst werden einige feste Produkte in einen Garbehälter gegeben, die auf dem Boden des Garbehälter angebraten werden. Dazu ist der Boden des Garbehälters als Bratboden ausgebildet. Ein Rührwerk kann vorgesehen werden, das einen Rührarm mit Schabern aufweist. Die Schaber können ein manuelles Wenden des Produktes vom Bratboden übernehmen. In einem weiteren Schritt könnte eine Zugabe einer flüssigen Substanz erfolgen, um das Ablöschen des angebratenen Produktes zu übernehmen. Im nächsten Schritt wird dann weitergegart. Dabei könnten dann zusätzlich Dickungsmittel hinzugegeben werden und schließlich eine Produktkühlung erfolgen. Ein eigentlicher Kochvorgang würde dabei nicht stattfinden. Auch derartige und weitere spezielle und andere Geräte sollen hier im Rahmen der Erfindung mit berücksichtigt werden.

Die beschriebenen Garbehälter sind insbesondere Garkessel oder Gartiegel.

Für den Kühlvorgang sind verschiedene Maßnahmen bekannt, die durchaus anspruchsvoll sind, da der Kühlvorgang innerhalb möglichst kurzer Zeit von einer Temperatur um etwa 100 °C auf diese relativ niedrige Temperatur stattfinden muss, um etwa der Vermehrung von Mikroorganismen während des Kühlvorganges entgegenzuwirken.

In erster Linie wird ein Rückkühlmodul eingesetzt, bei dem die Zylinderwandung des Garbehälters nicht mehr beheizt, sondern intensiv gekühlt wird.

Als eine mögliche weitere Maßnahme schlagen beispielsweise die EP 1 357 806 B1 und die EP 1 475 001 A2 vor, das Rührwerk, das den Rührvorgang in dem Gargerät durchführt, zugleich als Wärmetauscher auszubilden und so eine Kühlung nicht nur von Kühlschlangen in der Wandung des Kessels aus, sondern auch mitten in dem zu rührenden Nahrungsmittel zusätzlich durch das Rührwerk vorzunehmen. Ein weiteres Gargerät ist aus der WO 0106857 A bekannt.

Diese aus der EP 1 357 806 B1 bekannte Maßnahme wie auch andere im Stand der Technik eingesetzte Kühlvorgänge von der Zylinderwandung des Garbehälters aus sind zwar zielgerichtet, es besteht jedoch unverändert ein starkes Interesse daran, diese Maßnahmen zu unterstützen oder auch alternativ Möglichkeiten für eine Abkühlung der in dem Garbehälter befindlichen, fertig zubereiteten und daher auf hoher Temperatur befindlichen Nahrungsmittel vorzuschlagen.

Aufgabe der Erfindung ist es daher, Gargeräte vorzuschlagen, die solche alternativen oder zusätzlichen Möglichkeiten bieten. Eine weitere Aufgabe der Erfindung besteht darin, ein Verfahren zum Betreiben eines derartigen Gargerätes vorzuschlagen.

Diese Aufgabe wird bei einem gattungsgemäßen Gargerät durch die Merkmale des Kennzeichens von Anspruch 1 gelöst.

Die weitere Aufgabe wird bei einem Verfahren zum Betreiben eines Gargerätes erfindungsgemäß dadurch gelöst, dass zunächst die Hauptbestandteile des Nahrungsmittels in den Garbehälter eingefüllt werden, dass dann die Einfüllöffnung mit dem Rostelement und dem Deckelelement verschlossen wird, dass dann mittels des Heizaggregates der Garvorgang unter gegebenenfalls Betätigung des Rührwerks eingeleitet wird, dass nach Beendigung des Garvorgangs das Deckelelement geöffnet, das Rostelement jedoch geschlossen gehalten wird, während das Rührwerk gegebenenfalls weiterläuft, und dass dann das Rückkühlmodul eine Kühlung des Nahrungsmittels im Garbehälter bei geöffnetem Deckelelement vornimmt.

Die Erfindung macht von einem bisher unbeachtet gebliebenen Effekt Gebrauch. So ist es selbstverständlich während des Garvorgangs erforderlich, dass der Garbehälter weitestmöglich nach oben verschlossen ist, damit während dieses Zubereitungs- und Garvorgangs die erzeugte Wärmeenergie nicht unnötig verloren geht und auch der Wasserdampfgehalt im Garbehälter nicht in die Umgebung gelangt, sondern im Nahrungsmittel verbleibt.

Außerdem muss schon aus Sicherheitsgründen verhindert werden, dass das Personal während des Vorgangs versehentlich mit den Händen in das Rührwerk greifen kann.

Aus diesen Gründen arbeiten die bekannten Gargeräte mit einer Einfüllöffnung, durch die von oben vor dem Garprozess die angefertigten und vorbereiteten Substanzen in den Garbehälter eingefüllt werden können, die aber während des gesamten anschließenden Vorganges (mit einigen im Folgenden erörterten Ausnahmen) verschlossen bleibt. Nach dem Einfüllen, aber vor dem Garvorgang kann mit Unterstützung des Rührwerks ein Mischvorgang der eingefüllten Substanzen durchgeführt werden.

Da es gelegentlich jedoch erforderlich ist, während eines Garvorgangs noch weitere Substanzen, etwa Gewürze, nachträglich in durchaus erheblichen Mengen hinzu zu geben, sind hierfür relativ klein gehaltene Einfüllöffnungen in dem Verschlussdeckel vorgesehen, die leider die Tendenz haben, sich rasch zuzusetzen. Die Einfüllöffnungen werden so klein gehalten, damit nicht durch sie hindurch gegriffen werden kann und damit nicht durch diese Einfüllöffnungen mehr Energie und Feuchtigkeit entweichen kann als bedingt durch diese Öffnung zwingend erforderlich.

Auch nach Abschluss des Garvorganges wird die Zubereitung durch eine Bewegung des Rührwerks fortgesetzt, um auch den Kühlvorgang möglichst gleichmäßig im gesamten Nahrungsmittel vorzunehmen und eine Klumpenbildung zu vermeiden. Es ist also unverändert erforderlich, dass ein Eingreifen der Benutzer in das Rührwerk verhindert wird.

Erfindungsgemäß wird nun von der Erkenntnis Gebrauch gemacht, dass dieser sichere Verschluss nach dem Abschluss des Garvorgangs nicht mehr erforderlich ist, sondern dass es dann ausreicht, wenn während des fortgesetzten Rührvorganges ein Zugreifen in den Garbehälter verhindert wird.

Die Erfindung basiert also auf dem für den Fachmann neuen Gedanken, dass das Verschließen des zylindrischen Garbehälters bei genauer Betrachtung zwei unterschiedlichen Aufgaben dient, die auch unterschiedlich bearbeitet werden können, nämlich zum Einen der Verschluss zum Festhalten von Wärme, Energie und Feuchtigkeit und zum Anderen der Verschluss gegen einen Eingriff in das Rührwerk.

Der Eingriff in das Rührwerk muss während des gesamten Behandlungsvorganges des Nahrungsmittels verhindert werden, das Zurückhalten von Wärmeenergie und Feuchtigkeit im Inneren des Garbehälters ist dagegen nur während des Garvorganges sinnvoll und gewünscht. Nach Beendigung des Garvorganges ist diese Aufgabe des Verschlusses nicht nur beendet, sondern kehrt sich ins Gegenteil um: Während des Abkühlvorganges ist die bisher so wertvolle Wärmeenergie im Nahrungsmittel unerwünscht und soll schnellstmöglich durch energetisch teure Kühlvorgänge aus dem Nahrungsmittel entzogen werden. Dieses Entziehen wird begünstigt, wenn es für die im Nahrungsmittel enthaltene Wärmeenergie nicht nur die auch schon im Stand der Technik bekannten Wege in die Zylinderwandung und ggf. wie in der EP 1 357 806 B1 in das Rührwerk geben würde, sondern auch noch aus der bisher stets verschlossen bleibenden Öffnung.

Daher wird ein in zwei Stufen verschließbarer beziehungsweise in zwei Stufen getrennt voneinander zu öffnender Deckel vorgeschlagen, der aus einem dem Gargut näher liegenden Rost und einem dem Außenraum näher liegenden schließbaren Deckel besteht.

Das ermöglicht es, während des Garvorgangs den gesamten Deckel bestehend aus Rost und äußerem Deckel geschlossen zu halten und so die Wärme im Behälter zu halten, jedoch nach dem Abschluss des Garvorganges, aber während der fortgesetzten Bewegung des Rührwerks und der Durchführung des Kühlvorganges durch das Rückkühlmodul den äußeren Deckel zu öffnen, den Rost aber weiterhin geschlossen zu halten.

Dadurch wird allen Sicherheitsanforderungen während des gesamten Vorganges genügt, während die nach Abschluss des Garvorganges nicht mehr benötigte und sogar unerwünschte Wärmeenergie durch den Rost hindurch nach außen entweichen kann und so den Kühlvorgang deutlich beschleunigt.

Neben der Beschleunigung des Vorgangs tritt auch noch der Effekt auf, dass weniger Kühlenergie für das Herabkühlen des zubereiteten Nahrungsmittels benötigt wird. Dies ist einerseits wirtschaftlich sinnvoll und spart Energiekosten und ist andererseits natürlich auch ökologisch erwünscht und führt zu einer umweltfreundlicheren Nutzung der zur Verfügung stehenden Ressourcen.

Nach Abschluss auch des Kühlvorganges und insbesondere des Rührprozesses kann dann auch gegebenenfalls der Rost geöffnet werden und das Nahrungsmittel steht zur Entnahme bereit.

Es gibt auch Garvorgänge, die in einem Garbehälter durchgeführt werden, ohne dass das vorgesehene Rührwerk betätigt wird. Auch diese Garvorgänge sind selbstverständlich auch in einer erfindungsgemäßen Ausführungsform denkbar und durchführbar, so dass die Funktionalität und die Möglichkeiten der Geräte auch in dieser Beziehung nicht eingeschränkt sind.

Eine bevorzugte Ausführungsform der Erfindung zeichnet sich dadurch aus, dass während des Betreibens des Rührwerks eine Öffnung des Deckelelements bei Geschlossenhaltung des Rostelements möglich ist. Das Gargerät ist also so aufgebaut, dass das Rostelement und das Deckelelement in der Einfüllöffnung derart angeordnet sind, dass das Rostelement geschlossen haltbar ist, während eine Öffnung des Deckelelements erfolgt und das Rührwerk in Betrieb ist.

Mit dieser Ausführungsform ist auch noch eine weitere Möglichkeit verbunden. Es kann nämlich während des Garvorganges für die Zugabe von Gewürzen und anderen nachträglichen Zuschlagstoffen der äußere Deckel vorübergehend kurz geöffnet werden, wobei der Rost geschlossen bleibt. Damit ist auch während dieses Vorganges den Sicherheitsanforderungen genüge getan, gleichwohl steht die gesamte, lediglich durch den Rost verschlossene Öffnung für das Zuschütten zusätzlicher Zuschlagstoffe und Flüssigkeiten zur Verfügung, so dass man nicht mehr auf die im Stand der Technik vorgesehenen kleinen Einfüllöffnungen angewiesen ist.

Der große Vorteil dieser erfindungsgemäßen Ausführungsform des Rostelementes liegt darin, dass auch größere Mengen an Pulver, Dickungsmittel, Gewürzmischungen, vollständigen und noch festen Gewürzen selbst und auch von Flüssigkeiten direkt in die mittels Rühren durch das Rührwerk in Bewegung gehaltene, im Garbehälter befindliche Lösung untergemischt werden können, und zwar ohne zu klumpen, und ohne das bisher typische Verkleben beim Hinzugeben durch ein einzelnes, relativ kleines Loch.

Der Verschluss der Einfüllöffnung ist damit auch optisch attraktiver, da er nicht mehr durch kleinräumige Einfüllöffnungen unterbrochen wird; er ist auch mechanisch stabiler, da diese Verschlüsse der Einfüllöffnungen angesichts der unter Umständen erheblichen Druck- und Wärmebeanspruchungen im Inneren des Garbehälters und der auftretenden Temperaturdifferenzen zwischen Innen- und Außenraum auch erheblichen mechanischen Beanspruchungen ausgesetzt sind, die sie auf diese Weise deutlich besser bestehen können.

Von besonderem Vorzug ist es, wenn der äußere Deckel mit einer Sichtscheibe versehen ist.

Auch diese Möglichkeit wird zum Einen insbesondere durch den Fortfall zusätzlicher Einfüllöffnungen erst möglich bzw. gefördert, da die volle Fläche des Verschlusses bzw. des äußeren Deckels des Verschlusses für den Einbau einer derartigen Sichtscheibe zur Verfügung steht.

Es entsteht jedoch noch ein zusätzlicher Vorteil.

Dadurch wird nämlich anders als im Stand der Technik bekannt es für das Personal möglich, den Garvorgang zu beobachten und stets Sichtprüfungen vorzunehmen, ob etwa die Farbgebung und Konsistenz der zubereiteten Speise den Wünschen und Vorstellungen entspricht. Zu bedenken ist ja, dass zu den zuzubereitenden Nahrungsmitteln auch Speisen wie Hühnerfrikassee gehören, die keine homogene Masse darstellen, so dass an einer Beobachtung der heterogenen Zusammensetzung und der Teilchengröße während des Zubereitungsvorgangs durchaus Interesse besteht.

Da keine kleinteiligen Einfüllöffnungen im Deckel mehr vorgesehen werden müssen, kann der äußere Deckel auch hermetisch dicht abschließend ausgestattet werden. Auf diese Weise wird es möglich, in dem Garbehälter auch einen Überdruck aufzubauen, was für verschiedene Zubereitungsarten von Nahrungsmitteln gewünscht wird oder jedenfalls weitere Möglichkeiten eröffnet.

Besonders bevorzugt ist es, wenn das Rostelement des Verschlusses des Gardeckels mit einem Sensorelement ausgerüstet ist, wobei dieses Sensorelement genau anzeigt, ob das Rostelement nun aufliegt oder nicht.
Das Sensorelement kann außerdem mit einem Anzeigeelement verbunden sein, welches Anzeigeelement eine von dem Sensorelement festgestellte Lösung des Rostelements anzeigt. Dem Benutzer wird also angezeigt, dass das Rostelement gelöst worden ist oder nicht ordnungsgemäß aufliegt. Dieses Anzeigeelement kann am Gerät selbst oder aber auch in einer Zentrale angeordnet sein und die Feststellungen des Sensorelements dorthin übertragen werden.

Dieses Sensorelement kann dann mit oder ohne ein solches Anzeigeelement in einer bevorzugten Ausführungsform dazu genutzt werden, eine Zwangsabschaltung des Rührwerks vorzunehmen, wenn das Rostelement nicht aufliegt. Es kann daher auch davon abgesehen werden, dass Rostelement fest verschließbar in dieser Lage auszustatten. Es genügt, es lose aufliegen zu lassen. Da durch das Sensorelement die Position des Rostelements beziehungsweise das Nichtvorhandensein des Rostelements erkannt wird, kann auf diese Weise die anschließende Funktionalität noch besser gewährleistet werden. Darüber hinaus entsteht auch kein Zeitverlust in den Momenten, in denen tatsächlich das Rostelement korrekt aus seiner Lage entfernt werden soll.

Dadurch wird dem Sicherheitsaspekt zusätzlich Rechnung getragen. Dies erleichtert es, während des Zubereitungs- und Garvorganges pulverförmige oder flüssige zusätzliche Zuschlagsstoffe durch den Rost bei geöffnetem äußeren Deckel in das Nahrungsmittel während des Rührvorganges zu geben, gleichwohl aber eine versehentliche oder missbräuchliche Öffnung des Gitterrostes und ein Eingreifen in das Rührwerk zu verhindern. Es wird also möglich, völlig problemlos während und in einen Rührvorgang hinein weitere Stoffe einzugeben, was die Zubereitungsmöglichkeiten deutlich erhöht und die benötigte Gesamtzeit für die Zubereitung reduziert. Bisher musste für derartige Maßnahmen das komplette Rührwerk stillgesetzt werden. Trotzdem werden erfindungsgemäß alle Sicherheitsvorschriften erfüllt.

Um den Gitterrost zu reinigen, kann dieser nach Beendigung des gesamten Rührvorganges, also nach Abschluss aller Gar- und späteren Kühlvorgänge gelöst werden. Dadurch sprechen natürlich die Sensorelemente entsprechend an und ein versehentliches Abheben während eines doch noch nicht abgeschalteten Rührwerks kann so verhindert werden bzw. zu einer Zwangsabschaltung des Rührwerks führen.

Als Sensorelement bieten sich insbesondere Reedkontakte an.

Bei einer Ausführungsform, bei der Heizaggregate mit einer Dampfheizung etwa in einem Doppelmantel um den Garbehälter eingesetzt werden, begünstigt das Rühren und Abschaben des zuzubereitenden Produktes zugleich auch einen höheren Energietransport, und zwar ohne dass das Produkt sich an der Wandung des Kessels ansetzt. Dadurch werden verschiedene Kochprozesse auch schneller ausführbar.

Der zweistufige Aufbau des Verschluss aus einem inneren Rost und einem äußeren Deckel ermöglicht es auch problemlos einen weiteren Effekt zu berücksichtigen. So ist das Offenstehen des Deckels zur zusätzlichen Abführung von Wärmeenergie aus dem Inneren des Garbehälters natürlich nur sinnvoll, bis die Temperatur des Nahrungsmittels im Garbehälter von beispielsweise 100 °C auf Zimmertemperatur abgekühlt ist. Der Kühlvorgang wird wie erwähnt jedoch noch weiter bis in einen Bereich weit unterhalb der Raumtemperatur fortgesetzt. Während dieser Fortsetzung des Kühlvorganges würde ein Kontakt mit dem Außenraum natürlich zu einer dann wiederum unerwünschten Zufuhr von Wärme durch die Luft im Außenraum stattfinden, die sich auf etwa Zimmertemperatur befindet. In diesem Moment kann der Koch und Anwender den Deckel wiederum schließen.

Dies kann natürlich unterstützt werden, indem ein entsprechendes Signal gegeben wird oder eine Temperaturanzeige den Koch auf dieses Erfordernis aufmerksam macht. Dieses Signal kann von einer Temperaturmesseinrichtung oder ggf. auch zeitgesteuert erfolgen.

Eine weitere bevorzugte Ausführungsform der Erfindung automatisiert auch diesen Vorgang. Der Schließmechanismus für den Deckel kann voll automatisch angesteuert werden. So kann eine automatische Schließung des äußeren Deckels in Abhängigkeit von einem Thermofühler und/oder einer Zeitschaltung angesteuert werden.

Der Deckel könnte sich also automatisch öffnen, wenn das Gargerät den Kühlprozess einleitet, die Zubereitung des Nahrungsmittels also den gewünschten hohen Temperaturbereich erreicht hat. Ebenso könnte eine automatische Schließung des Deckels dann in Abhängigkeit von dem Thermofühler vorgenommen werden, wenn der Kühlvorgang den Bereich der Zimmertemperatur erreicht hat und weiter zu tieferen Temperaturen fortgesetzt wird.

Auch weitere Schalt- und/oder Bewegungsvorgänge neben dem Automatismus zur Schließung und Öffnung des Deckels können prozessgesteuert ausgeführt werden.

Die Durchführung des erfindungsgemäßen Verfahrens kann manuell erfolgen, so dass beispielsweise die Hauptbestandteile des Nahrungsmittels nacheinander oder gemischt in den Garbehälter eingefüllt werden, die Schließvorgänge manuell durchgeführt werden und das Heizaggregat und gegebenenfalls das Rührwerk manuell eingeschaltet werden.

Möglich ist insbesondere aber auch ein automatisierter Ablauf. Über eine Fülleinrichtung mit einer Mengendosierung können die Hauptbestandteile zugegeben werden, also beispielsweise Flüssigkeiten wie etwa Milch oder Wasser. Diese Zugabe kann auch ein Prozessregler gesteuert vornehmen. Dabei können die Produkte, die verwendeten Mengen, die Zeitpunkte der verschiedenen Verfahrensschritte, die angestrebten Temperaturen der Heizaggregate und Kühlaggregate und auch weitere Daten rezeptabhängig in der Steuereinrichtung in Form etwa einer Garbibliothek hinterlegt sein.

Im Folgenden wird anhand der Zeichnung ein Ausführungsbeispiel der Erfindung näher beschrieben. Es zeigen:

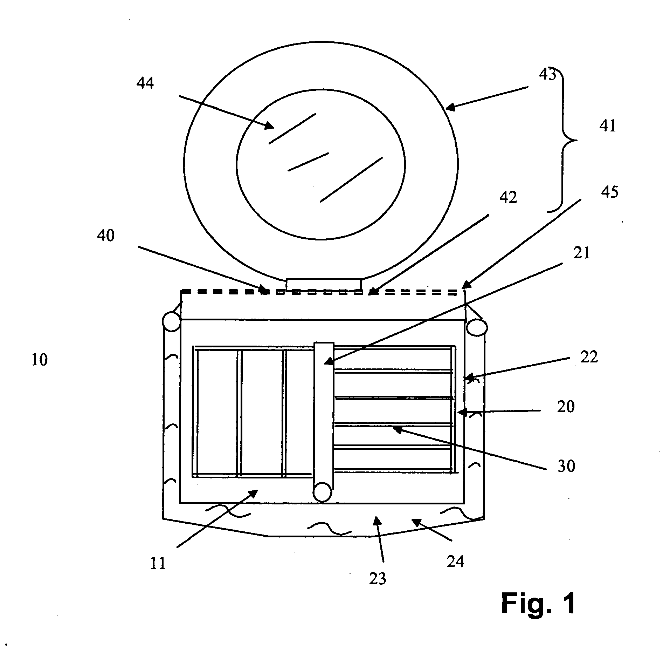

- Figur 1: einen Schnitt durch eine schematische Darstellung einer Ausführungsform eines erfindungsgemäßen Gargerätes.

Ein Gargerät 10 dient zur Zubereitung eines Nahrungsmittels 11. Dieses Nahrungsmittel 11 ist ein rührfähiges Erzeugnis, beispielsweise eine Suppe, eine Soße, ein Pudding, beispielsweise aber auch Kartoffelbrei, Hühnerfrikassee, Apfelmus oder Bolognesesoße für Nudelgerichte.

Dieses Nahrungsmittel 11 wird in dem Gargerät 10 in einem Garbehälter 20 zubereitet.

Der Garbehälter 20 ist zylindrisch und besitzt eine vertikale Mittelachse 21 sowie eine zylindersymmetrische Wandung 22. Die Wandung 22 kann beispielsweise eine Doppelwand sein und enthält Heizaggregate 23 und Kühlaggregate 24, die aber auch miteinander kombiniert und für Kühl- und Heizzwecke eingesetzt werden können, je nach Ausführungsform. Die Heizaggregate 23 und die Kühlaggregate 24 sind in der Darstellung lediglich schematisch angedeutet, da sie sehr unterschiedlich aufgebaut sein können.

Die Doppelwand beziehungsweise der Doppelmantel des Garbehälters kann insbesondere ein Doppelmantel eines Kochkessels sein. Die Kühlschlangen der Kühlaggregate 24 können auch vollkommen getrennt von den Heizaggregaten 23 ausgeführt sein. Möglich ist auch eine Ausführungsform, bei der die Heizaggregate 23 zusätzlich oder auch alternativ zu anderen Heizaggregaten eine Bratplatte im Behälterboden beziehungsweise im Boden des Garbehälters bedienen beziehungsweise als solche integriert sind.

Um die Mittelachse 21 ist ein Rührwerk 30 vorgesehen. Das Rührwerk 30 dreht sich um die Mittelachse 21 und kann auch aus unterschiedlichen Rührelementen bestehen, die für bestimmte Einsatzfälle ausgetauscht werden.

In der Figur 1 sind zwei verschiedene Formen von Rührwerkarmen als Rührelemente des Rührwerks 30 dargestellt, um unterschiedliche Ausbildungen des Rührwerks zu veranschaulichen. Der Antrieb für das Rührwerk 30 ist nicht dargestellt; es kann sich um einen außerhalb des Garbehälters 20 angeordneten Motor handeln.

Grundsätzlich möglich wäre auch eine andere Anordnung des Rührwerks 30, also nicht symmetrisch zur Mittelachse 21. Das Rührwerk kann auch einschwenkbar gestaltet sein.

Während des Zubereitungsvorganges wird das Nahrungsmittel 11 im Inneren des Garbehälters 20 einerseits von den Heizaggregaten 23 in der Zylinderwandung 22 beaufschlagt, andererseits vom Rührwerk 30 durchmischt. Das Rührwerk 30 sorgt dabei nicht nur für eine mechanische Bearbeitung des Nahrungsmittels 11, sondern auch für eine möglichst gleichmäßige Verteilung der Wärmeenergie, die von den Heizaggregaten 23 aus in das Nahrungsmittel 11 durch die zylindrische Wandung 22 eingetragen wird.

Grundsätzlich denkbar ist es auch, weitere Wärmeenergie über das Rührwerk 30 in das Nahrungsmittel 11 einzutragen, in dem beispielsweise das Rührwerk 30 beheizt wird.

Der zylindrische Garbehälter 20 ist nach oben hin offen. Die Oberseite des Garbehälters 20 wird von einer Einfüllöffnung 40 gebildet. Durch diese Einfüllöffnung 40 wird vor Beginn des Zubereitungsvorganges das Nahrungsmittel bzw. die Zutaten eingefüllt. Diese Zutaten sind zum Einen Flüssigkeiten wie Wasser oder Milch, andererseits pulverförmige oder flockenförmige Grundsubstanzen, die vorher getrennt zubereitet oder angeliefert wurden.

Der Garbehälter 20 wird nach dem Einfüllen der Zutaten durch die Einfüllöffnung 40 während des Zubereitungsvorganges nach oben durch einen Verschluss 41 abgeschlossen, wobei dieser Verschluss 41 zwei Aufgaben leisten muss.

Zum Einen hält der Verschluss 41 die Wärmeenergie im Inneren des Garbehälters 20, insbesondere im Nahrungsmittel 11. Der Verschluss 41 ist also insgesamt entsprechend schlecht wärmeleitend ausgebildet, um die durch die Heizaggregate 23 zugeführte Wärmeenergie möglichst für die Zubereitung des Nahrungsmittels 11 zu nutzen und nicht aus dem Gerät entweichen zu lassen.

Zum Zweiten hat der Verschluss 41 die Aufgabe, zu verhindern, dass ein Benutzer von außen mutwillig oder versehentlich in das Rührwerk 30 im Inneren des Garbehälters 20 greift, welches Rührwerk sich mit beispielsweise 45 bis 60 Umdrehungen pro Minute drehen kann und daher zu erheblichen Verletzungen des Benutzers führen kann.

Um diese beiden vorgenannten Aufgaben zu lösen, wird in der erfindungsgemäßen und dargestellten Ausführungsform der Verschluss 41 von zwei getrennten Elementen 42 und 43 gebildet.

Man sieht ein dem Garbehälter 20 zugewandtes Rostelement 42. Das Rostelement 42 deckt die Einfüllöffnung 40 vollflächig nach oben ab, besteht jedoch aus sich kreuzenden Gitterstäben mit einer Maschenweite, die ein Eingreifen der Hände eines Benutzers in das Innere des Garbehälters 20 absolut sicher verhindern können, jedoch ein Einfüllen von kleinteiligeren Elementen zulassen, beispielsweise von pulverförmigem oder flockenförmigem oder flüssigem zusätzlichem Nahrungsmittel, das während des Zubereitungsvorganges noch dem Nahrungsmittel zugegeben werden soll. Hierbei kann es sich beispielsweise um Gewürze handeln, die sehr häufig nicht von Beginn an während einer Zubereitung schon im Nahrungsmittel enthalten sein sollen.

Der zweite, außerhalb des Rostelementes 42 angeordnete Teil des Verschlusses 41 ist ein Deckelelement 43. Dieses Deckelelement 43 übernimmt die temperaturisolierende Funktion und ist ebenfalls vollflächig über die Einfüllöffnung 40 erstreckt. Das Deckelelement 43 ist so aufgebaut und angeordnet, dass es die Einfüllöffnung 40 hermetisch abschließt. Es deckt dabei das Rostelement 42 nach oben hin ab. Das Rostelement 42 und das Deckelelement 43 liegen in verschlossenem Zustand also parallel zueinander und aufeinander in der Einfüllöffnung 40.

Das Rostelement 42 und das Deckelelement 43 sind jedoch separat voneinander derart zu öffnen, dass das Deckelelement 43 auch geöffnet werden kann, während das Rostelement 42 verschlossen bleibt.

In der Figur 1 ist nun schematisch eine Situation dargestellt, in der das Rostelement 42 horizontal angeordnet ist und die Einfüllöffnung 40 verschließt, während das Deckelelement 43 geöffnet ist, indem es um ein den Benutzer abgewandt dargestelltes Scharnier geschwenkt ist. Der Benutzer sieht in Figur 1 also von innen auf das Deckelelement 43.

Das Deckelelement 43 weist dabei eine große Sichtscheibe 44 auf.

Ist das äußere Deckelelement 43 geöffnet, das Rostelement 42 dagegen geschlossen, kann nicht nur von außen ein kleinteiliges, pulverförmiges oder flüssiges Nahrungsmittel eingefüllt werden, es kann in dem Falle auch gasförmige, beispielsweise erhitzte oder feuchte Luft aus dem Inneren des Garbehälters 20 durch die Maschen des Rostelementes 42 hindurch in den Außenraum gelangen.

Dies kann verhindert werden, indem auch das äußere Deckelelement 43 geschlossen bleibt.

Diese getrennte Möglichkeit des Öffnens und Verschließens des Rostelementes 42 und des Deckelelementes 43 ermöglichen eine besonders energetisch günstige Betriebsform des Gargerätes 10.

Ein Öffnen auch des Rostelementes 42 führt zu einer Zwangsabschaltung des Rührwerks 30. Dies ist in der Figur 1 schematisch durch ein Sensorelement 45 angedeutet, welches anspricht, wenn das Rostelement 42 gelöst und/oder aus der Einfüllöffnung 40 entfernt wird.

Auch dann, wenn das Deckelelement 43 geschlossen ist, ist dem Anwender und Koch ein Blick durch die Sichtscheibe 44 in das Innere des Garbehälters 20 möglich, sodass er das darin befindliche Nahrungsmittel 11 auch während des Zubereitungsvorgangs beobachten kann.

Nicht dargestellt in der Figur 1 sind verschiedene elektronische Elemente und eine Automatik, die in einer bevorzugten Ausführungsform ein automatisches Öffnen der verschiedenen Elemente 42 und 43 des Verschlusses 41 steuert und regelt.

In einer nicht dargestellten Ausführungsform ist es denkbar, dass Rostelement 42 noch zusätzlich klappbar und mittels eines Scharniers ein Segment davon einzeln so zu gestalten, dass es separat geöffnet werden kann. Dadurch können auch größere Substanzen hineingegeben werden, die aus Gründen des Berührschutzes nicht durch die Maschenweite des Rostelementes passen oder gegeben werden sollen.

Wird eine derartige Ausführungsform gewählt, wird bevorzugt auch dieses Segment des Rostelementes so ausgestaltet, dass das Sensorelement 45 oder jedenfalls eines von mehreren Sensorelementen 45 den Zustand dieses Segmentes erfasst und anzeigt.

Bevorzugt und nicht dargestellt ist auch, dass ein weiteres Sensorelement den Schließungszustand des Deckelelementes 43 erfasst und anzeigt oder jedenfalls der Elektronik einer Prozesssteuerung mitteilt, ob das Deckelelement nun offen steht oder ob das Deckelement geschlossen ist. Dies ist für den Kühlvorgang besonders wertvoll, um wie oben erörtert während des Herunterkühlens von hohen Temperaturen sicherzustellen, dass das Deckelelement 43 auch geöffnet ist, so dass überschüssige und unerwünschte Wärmeenergie entweichen kann.

Grundsätzlich möglich wäre es dann auch, eine erfindungsgemäße Ausführungsform für bestimmte Anwendungsfälle ohne das Rostelement beziehungsweise bei herausgenommenen Rostelement zu betreiben. Liegt dann nämlich das Deckelement 43 auf und kann durch ein Anzeigelement sichergestellt werden, dass es nicht geöffnet ist, kann auch in diesem Zustand das Rührwerk 30 betrieben werden, obwohl das Rostelement 42 ja nicht in Position ist. Auch bei geschlossenem Deckelelement 43 wäre den Sicherheitsaspekten ja genüge getan.

Bei dieser Betriebsweise genügt es also, wenn entweder das Rostelement 43 oder das Deckelelement 43 oder aber beide Elemente beschlossen sind.

Nicht dargestellt ist die Möglichkeit, das Sensorelement 45 für das Rostelement 42 oder das Sensorelement für das Deckelelement 43 mit einem oder jeweils einem Anzeigeelement zu verbinden. Man könnte dann dem Benutzer oder auch einer Zentralüberwachung sichtbar machen, ob das Rostelement 42 oder das Deckelelement 43 oder beide geöffnet sind.

Es kann ferner vorgesehen werden, dass der gesamte Garbehälter 20 mit seinem Inhalt, also dem zuzubereitendem beziehungsweise zubereiteten Nahrungsmittel 11 um eine horizontale Achse geschwenkt und gekippt werden kann, um beispielsweise einen Entleerungsvorgang zu unterstützen oder alternativ auch eine Zubereitung in einem Garbehälter 20 mit geneigter Drehachse 21 des Rührwerks 30 zu ermöglichen.

### Bezugszeichenliste

- 10: Gargerät
- 11: Nahrungsmittel
- 20: Garbehälter
- 21: Mittelachse des Garbehälters
- 22: zylindrische Wandung des Garbehälters
- 23: Heizaggregat
- 24: Kühlaggregat
- 30: Rührwerk
- 40: Einfüllöffnung
- 41: Verschluss
- 42: Rostelement
- 43: Deckelelement
- 44: Sichtscheibe im Deckelelement
- 45: Sensorelement für Rostelement

## Patentansprüche

1. Gargerät
mit einem Garbehälter (20) und einer Einfüllöffnung (40),
mit einem im Garbehälter (20) angeordnetem Rührwerk (30),
mit einem Heizaggregat (23) zur Erhitzung eines Nahrungsmittels (11) im Garbehälter (20),
mit einem Rückkühlmodul (24) zur Kühlung des Nahrungsmittels (11) im Garbehälter (20),
mit einem Verschluss (41) für die Einfüllöffnung (40) des Garbehälters (20), der geöffnet werden kann,
**dadurch gekennzeichnet,**
**dass** der Verschluss (41) der Einfüllöffnung (40) ein Rostelement (42) mit Öffnungen und ein die Einfüllöffnung (40) vollständig schließendes Deckelelement (43) aufweist, und
**dass** das Rostelement (42) und das Deckelelement (43) getrennt voneinander und/oder gemeinsam geöffnet werden kann.

2. Gargerät nach Anspruch 1,
**dadurch gekennzeichnet,**
**dass** das Rostelement (42) eine Maschenweite aufweist, die ein Hindurchgreifen nicht gestattet.

3. Gargerät nach Anspruch 1 oder 2,
**dadurch gekennzeichnet,**
**dass** das Rostelement (42) ein Sensorelement (45) aufweist, das eine Lösung des Rostelementes (42) aus der Einfüllöffnung (40) feststellt und/oder
**dass** das Deckelelement (43) ein Sensorelement aufweist, welches eine Lösung des Deckelelements (43) aus seiner Position feststellt.

4. Gargerät nach Anspruch 3,
**dadurch gekennzeichnet,**
**dass** das Sensorelement (45) des Rostelements (42) und/oder das Sensorelement des Deckelelements (43) mit einem oder jeweils einem Anzeigeelement verbunden sind, das eine festgestellte Lösung des Rostelements (42) und/oder des Deckelelements (43) anzeigt.

5. Gargerät nach Anspruch 3 oder 4,
**dadurch gekennzeichnet,**
**dass** eine Steuerungseinrichtung vorgesehen ist, die mit dem Sensorelement (45) des Rostelements (42) in Verbindung steht, und dass die Steuereinrichtung mit dem Rührwerk (30) so verbunden ist, dass abhängig von der Feststellung des Sensorelementes (45) eine Zwangsabschaltung des Rührwerks (30) ermöglicht ist.

6. Gargerät nach einem der Ansprüche 3 bis 5,
**dadurch gekennzeichnet,**
**dass** das Sensorelement (45) des Rostelements (42) und/oder das Sensorelement des Deckelelementes (43) mit einem beziehungsweise jeweils einem Reedkontakt ausgestattet ist.

7. Gargerät nach einem der vorstehenden Ansprüche,
**dadurch gekennzeichnet,**
**dass** das Deckelelement (43) mit einem transparenten Element ausgestattet ist oder ganz aus diesem besteht.

8. Gargerät nach Anspruch 7,
**dadurch gekennzeichnet,**
**dass** das transparente Element eine Sichtscheibe (44) aufweist.

9. Gargerät nach einem der vorstehenden Ansprüche,
**dadurch gekennzeichnet,**
**dass** das Rostelement (42) und das Deckelelement (43) so in der Einfüllöffnung (40) angeordnet sind, dass das Rostelement (42) geschlossen haltbar ist, während eine Öffnung des Deckelelements (43) erfolgt und das Rührwerk (30) in Betrieb ist.

10. Gargerät nach einem der vorstehenden Ansprüche,
**dadurch gekennzeichnet,**
**dass** das Deckelelement (43) hermetisch verschließbar ist, und
**dass** im Garbehälter (20) bei hermetisch verschlossenem Deckelelement (43) ein Überdruck aufbaubar ist.

11. Gargerät nach einem der vorstehenden Ansprüche,
**dadurch gekennzeichnet,**
**dass** im Inneren des Garbehälters (20) ein Temperaturfühler vorgesehen ist und/oder
**dass** eine Zeitschalteinrichtung vorgesehen ist, und
**dass** eine Steuereinrichtung vorgesehen ist, die mit dem Temperaturfühler und/oder der Zeitschalteinrichtung verbunden ist, und dass die Steuereinrichtung mit einer Einrichtung zum Öffnen und Schließen des Rostelements (42) und/oder des Deckelelements (43) zum Ansteuern einer automatischen Öffnung und Schließung des Rostelements (42) beziehungsweise des Deckelelements (43) verbunden ist.

12. Gargerät nach Anspruch 11,
**dadurch gekennzeichnet,**
**dass** die Steuereinrichtung so ausgebildet ist, dass sie eine prozessgeregelte Steuerung des Zubereitungsvorgangs des Nahrungsmittels und/oder der Offnungs- und Schließvorgänge des Rostelements (42) und/oder des Deckelementes (43) vornehmen kann, und
**dass** die Steuereinrichtung mit Elementen zum Heranziehen weiterer physikalischer Größen und/oder Elementen zum Beeinflussen weiterer physikalischert Größen verbunden ist.

13. Gargerät nach Anspruch 12,
**dadurch gekennzeichnet,**
**dass** eine der weiteren physikalischen Größen der Druck im Garbehälter (20) und/oder Heizraum ist.

14. Verfahren zum Betreiben eines Gargeräts nach einem der vorstehenden Ansprüche,
**dadurch gekennzeichnet,**
**dass** zunächst die Hauptbestandteile des Nahrungsmittels (11) in den Garbehälter (20) eingefüllt werden,
**dass** dann die Einfüllöffnung (40) mit dem Rostelement (42) und dem Deckelelement (43) verschlossen wird,
**dass** dann mittels des Heizaggregates (23) der Garvorgang unter gegebenenfalls Betätigung des Rührwerks (30) eingeleitet wird,
**dass** nach Beendigung des Garvorgangs das Deckelelement (43) geöffnet, das Rostelement (42) jedoch geschlossen gehalten wird, während das Rührwerk (30) gegebenenfalls weiterläuft, und
**dass** dann das Rückkühlmodul (24) eine Kühlung des Nahrungsmittels (11) im Garbehälter (20) bei geöffnetem Deckelelement (43) vornimmt.

15. Verfahren nach Anspruch 14,
**dadurch gekennzeichnet,**
**dass** während des Kühlvorgangs die Einfüllöffnung (40) wieder verschlossen wird, wenn die Temperatur des Deckelelements (43) des Verschlusses (41) die Raumtemperatur oder die Umgebungstemperatur unterschreitet, und
**dass** danach der Kühlvorgang bis zur gewünschten Zieltemperatur fortgesetzt wird.

16. Verfahren nach Anspruch 14 oder 15,
**dadurch gekennzeichnet,**
**dass** während des Garvorgangs bei laufendem Rührwerk (30) das Deckelelement (43) geöffnet wird, während das Rostelement (42) geschlossen gehalten wird, und
**dass** während des Offenhaltens des Deckelelementes (43) zusätzliche Nahrungsmittel (11) dem Garvorgang im Inneren des Garbehälters (20) zugeführt werden.

17. Verfahren nach einem der Ansprüche 14 bis 16,
**dadurch gekennzeichnet,**
**dass** die verschiedenen Verfahrensabschnitte jeweils automatisiert und gesteuert über eine Steuereinrichtung erfolgen, in der rezeptabhängig die einzelnen Daten für Mengen, Zeitpunkte und weitere Daten als Garbibliothek hinterlegt sind.

## Claims

1. Cooking device with a cooking container (20) and a filling opening (40), with a stirrer (30) arranged in the cooking container (20), with a heating unit (23) for heating a foodstuff (11) in the cooking container (20), with a cooling module (24) for cooling the foodstuff (11) in the cooking container (20), with a closure (41) for the filling opening (40) of the cooking container (20), which can be opened, **characterised in that** the closure (41) for the filling opening (40) has a grid element (42) with openings and a cover element (43) completely closing the filling opening (40), and **in that** the grid element (42) and the cover element (43) can be opened separately from one another and/or together.

2. Cooking device according to claim 1, **characterised in that** the grid element (42) has an aperture size, which does not allow anyone to reach through it.

3. Cooking device according to claim 1 or 2, **characterised in that** the grid element (42) has a sensor element (45), which detects a release of the grid element (42) from the filling opening (40) and/or **in that** the cover element (43) has a sensor element, which detects a release of the cover element (43) from its position.

4. Cooking device according to claim 3, **characterised in that** the sensor element (45) of the grid element (42) and/or the sensor element of the cover element (43) are connected to a display element or a respective display element, which indicates a detected release of the grid element (42) and/or the cover element (43).

5. Cooking device according to claim 3 or 4, **characterised in that** a control mechanism is provided, which is connected to the sensor element (45) of the grid element (42), and **in that** the control mechanism is connected to the stirrer (30) in such a way that, depending on the determination by the sensor element (45) an automatic switch-off of the stirrer (30) is enabled.

6. Cooking device according to any one of claims 3 to 5, **characterised in that** the sensor element (45) of the grid element (42) and/or the sensor element of the cover element (43) is equipped with a reed contact or a respective reed contact.

7. Cooking device according to any one of the preceding claims, **characterised in that** the cover element (43) is equipped with a transparent element or consists completely thereof.

8. Cooking device according to claim 7, **characterised in that** the transparent element comprises a viewing window (44).

9. Cooking device according to any one of the preceding claims, **characterised in that** the grid element (42) and the cover element (43) are arranged in the filling opening (40) in such a way that the grid element (42) can be kept closed while the cover element (43) is opened and the stirrer (30) is in operation.

10. Cooking device according to any one of the preceding claims, **characterised in that** the cover element (43) can be hermetically sealed and **in that** an excess pressure can be built up in the cooking container (20) when the cover element (43) is hermetically sealed.

11. Cooking device according to any one of the preceding claims, **characterised in that** a temperature detector is provided in the interior of the cooking container (20) and/or **in that** a time switch mechanism is provided, and **in that** a control mechanism is provided, which is connected to the temperature detector and/or the time switch mechanism, and **in that** the control mechanism is connected to a mechanism for opening and closing the grid element (42) and/or the cover element (43) to control an automatic opening and closing of the grid element (42) or the cover element (43).

12. Cooking device according to claim 11, **characterised in that** the control mechanism is configured in such a way that it can carry out a process-regulated
control of the preparation process of the food and/or of the opening and closing processes of the grid element (42) and/or of the cover element (43), and **in that** the control mechanism is connected to elements for using further physical variables and/or elements for influencing further physical variables.

13. Cooking device according to claim 12, **characterised in that** one of the further physical variables is the pressure in the cooking container (20) and/or in the heating space.

14. Method for operating a cooking device according to any one of the preceding claims, **characterised in that**, firstly, the main ingredients of the food (11) are introduced into the cooking container (20), **in that** the filling opening (40) is then closed with the grid element (42) and the cover element (43), and **in that** the cooking process is then initiated by means of the heating unit (23), optionally with actuation of the stirrer (30), **in that** when the cooking process has ended, the cover element (43) is opened, the grid element (42) is, however, kept closed, while the stirrer (30) optionally continues to run, and **in that** the cooling module (24) then carries out a cooling of the food (11) in the cooking container (20) with the cover element (43) open.

15. Method according to claim 14, **characterised in that**, during the cooling process, the filling opening (40) is closed again if the temperature of the cover element (43) of the closing device (41) falls below the room temperature or the ambient temperature, and **in that** the cooling process is continued thereafter to the desired target temperature.

16. Method according to claim 14 or 15, **characterised in that**, during the cooking process with the stirrer (30) running, the cover element (43) is opened, while the grid element (42) is kept closed, and **in that** additional food (11) is supplied to the cooking process in the interior of the cooking container (20) while the cover element (43) is kept open.

17. Method according to any one of claims 14 to 16, **characterised in that** the various method stages in each case take place in an automated and controlled manner by means of a control mechanism, in which the individual data for quantities, times and further data are stored as a cooking library depending on the recipe.

## Revendications

1. Appareil de cuisson, comportant
un récipient de cuisson (20) et une ouverture de remplissage (40),
un agitateur (30) disposé dans le récipient de cuisson (20),
un organe de chauffage (23) pour chauffer un produit alimentaire (11) dans le récipient de cuisson (20),
un module de refroidissement (24) pour refroidir le produit alimentaire (11) dans le récipient de cuisson (20),
un obturateur (41), prévu pour l'ouverture de remplissage (40) du récipient de cuisson (20) et pouvant être ouvert,
**caractérisé**
**en ce que** l'obturateur (41) de l'ouverture de remplissage (40) comporte un élément grille (42) doté d'ouvertures et un élément couvercle (43) fermant totalement l'ouverture de remplissage (40), et
**en ce que** l'élément grille (42) et l'élément couvercle (43) peuvent être ouverts séparément l'un de l'autre et/ou conjointement.

2. Appareil de cuisson selon la revendication 1,
**caractérisé en ce que** l'élément grille (42) possède une ouverture de maille empêchant de passer la main à travers.

3. Appareil de cuisson selon la revendication 1 ou 2,
**caractérisé**
**en ce que** l'élément grille (42) comporte un élément détecteur (45) qui constate que l'élément grille (42) est enlevé de l'ouverture de remplissage (40), et/ou
**en ce que** l'élément couvercle (43) comporte un élément détecteur qui constate un enlèvement de l'élément couvercle (43) d'après sa position.

4. Appareil de cuisson selon la revendication 3,
**caractérisé**
**en ce que** l'élément détecteur (45) de l'élément grille (42) et/ou l'élément détecteur de l'élément couvercle (43) sont reliés à un élément d'affichage commun ou respectif qui affiche un enlèvement constaté de l'élément grille (42) et/ou de l'élément couvercle (43).

5. Appareil de cuisson selon la revendication 3 ou 4,
**caractérisé**
**en ce qu'**un dispositif de commande est prévu, qui est relié à l'élément détecteur (45) de l'élément grille (42), et
**en ce que** le dispositif de commande est relié à l'agitateur (30) de telle sorte qu'une désactivation forcée de l'agitateur (30) en fonction de la constatation de l'élément détecteur (45) est rendue possible.

6. Appareil de cuisson selon l'une quelconque des revendications 3 à 5,
**caractérisé**
**en ce que** l'élément détecteur (45) de l'élément grille (42) et/ou l'élément détecteur de l'élément couvercle (43) sont équipés d'un contact Reed commun ou respectif.

7. Appareil de cuisson selon l'une quelconque des revendications précédentes,
**caractérisé**
**en ce que** l'élément couvercle (43) est équipé d'un élément transparent ou est constitué en totalité de ce celui-ci.

8. Appareil de cuisson selon la revendication 7,
**caractérisé**
**en ce que** l'élément transparent comporte une vitre de regard (44).

9. Appareil de cuisson selon l'une quelconque des revendications précédentes,
**caractérisé**
**en ce que** l'élément grille (42) et l'élément couvercle (43) sont disposés dans l'ouverture de remplissage (40) de telle sorte que l'élément grille (42) peut être maintenu fermé, tandis qu'on ouvre l'élément couvercle (43) et que l'agitateur (30) est en marche.

10. Appareil de cuisson selon l'une quelconque des revendications précédentes,
**caractérisé**
**en ce que** l'élément couvercle (43) peut être hermétiquement fermé, et
**en ce qu'**une surpression peut être établie dans le récipient de cuisson (20) lorsque l'élément couvercle (43) est hermétiquement fermé.

11. Appareil de cuisson selon l'une quelconque des revendications précédentes,
**caractérisé**
**en ce qu'**un capteur de température est prévu à l'intérieur du récipient de cuisson (20), et/ou
**en ce qu'**un dispositif de minuterie est prévu, et en ce qu'un dispositif de commande est prévu, qui est relié au capteur de température et/ou au dispositif de minuterie, et
**en ce que** le dispositif de commande est relié à un dispositif pour ouvrir et fermer l'élément grille (42) et/ou l'élément couvercle (43), afin de commander une ouverture et une fermeture automatiques de l'élément grille (42) et/ou de l'élément couvercle (43).

12. Appareil de cuisson selon la revendication 11,
**caractérisé**
**en ce que** le dispositif de commande est conçu de telle sorte qu'il peut entreprendre une commande à processus régulé de l'opération de préparation du produit alimentaire et/ou des opérations d'ouverture et de fermeture de l'élément grille (42) et/ou de l'élément couvercle (43), et
**en ce que** le dispositif de commande est relié à des éléments pour faire appel à des grandeurs physiques supplémentaires et/ou à des éléments pour agir sur des grandeurs physiques supplémentaires.

13. Appareil de cuisson selon la revendication 12,
**caractérisé en ce qu'**une des grandeurs physiques supplémentaires est la pression dans le récipient de cuisson (20) et/ou dans le foyer.

14. Procédé pour faire fonctionner un appareil de cuisson selon l'une quelconque des revendications précédentes,
**caractérisé**
**en ce qu'**on remplit d'abord le récipient de cuisson (20) des principaux ingrédients du produit alimentaire (11),
**en ce qu'**on ferme ensuite l'ouverture de remplissage (40) avec l'élément grille (42) et l'élément couvercle (43),
**en ce qu'**on déclenche ensuite l'opération de cuisson au moyen de l'organe de chauffage (23), tout en actionnant éventuellement l'agitateur (30),
**en ce qu'**une fois l'opération de cuisson achevée, on ouvre l'élément couvercle (43) mais on maintient fermé l'élément grille (42), tandis que l'agitateur (30) continue éventuellement à fonctionner, et
**en ce que** le module de refroidissement (24) entreprend alors un refroidissement du produit alimentaire (11) dans le récipient de cuisson (20), avec l'élément couvercle (43) ouvert.

15. Procédé selon la revendication 14,
**caractérisé**
**en ce que**, pendant l'opération de refroidissement, l'ouverture de remplissage (40) est refermée lorsque la température de l'élément couvercle (43) de l'obturateur (41) tombe en dessous de la température de la pièce ou de la température ambiante, et
**en ce que** l'opération de refroidissement est ensuite poursuivie jusqu'à la température cible souhaitée.

16. Procédé selon la revendication 14 ou 15,
**caractérisé**
**en ce que**, pendant l'opération de cuisson avec l'agitateur (30) en marche, l'élément couvercle (43) est ouvert tandis que l'élément grille (42) est maintenu fermé, et
**en ce que**, tandis que l'élément couvercle (43) est maintenu ouvert, des produits alimentaires (11) supplémentaires sont apportés à l'opération de cuisson à l'intérieur du récipient de cuisson (20).

17. Procédé selon l'une quelconque des revendications 14 à 16,
**caractérisé**
**en ce que** les différentes étapes du procédé s'effectuent respectivement de façon automatisée et sous la commande d'un dispositif de commande dans lequel sont enregistrées, en fonction des recettes, les données individuelles de quantités et de temps et autres données, sous forme de bibliothèque de cuisson.
